# EUROPÄISCHE PATENTANMELDUNG

(11) **EP 4 813 206 A1**
(43) Veröffentlichungstag der Anmeldung: **30.09.2026**
(21) Anmeldenummer: 25166765.5
(22) Anmeldetag: 27.03.2025
(51) Int. Cl.: A01K 91/20, B65H 61/00, G01B 3/10

(54) **VORRICHTUNG ZUM MESSEN EINER LÄNGE EINER ANGELSCHNUR**

(71) Anmelder: Gramer, Christian, 3133 Traismauer (AT)
(72) Erfinder: Gramer, Christian, 3133 Traismauer (AT)
(74) Vertreter: Schwarz & Partner Patentanwälte GmbH

(57) **Zusammenfassung**

Die Erfindung betrifft eine Vorrichtung (1) zum Messen einer Länge einer Angelschnur (2), wobei die Vorrichtung (1) einen Spulkörper (4) mit einer rotationssymmetrisch um eine Spulachse (S) verlaufenden Lauffläche (7) für die Angelschnur (2) umfasst, wobei die Lauffläche (7) von zwei Begrenzungswänden (8) begrenzt ist, die in axialer Richtung beabstandet sind, wobei der Spulkörper (4) zumindest ein Verbindungselement (10, 11) zur Fixierung eines Endes der Angelschnur (2) umfasst, und wobei eine der Begrenzungswände (8) eine Ausnehmung (9) aufweist, um die Angelschnur (2) vom Verbindungselement (10, 11) auf die Lauffläche (7) zu führen.

## Beschreibung

Die Erfindung betrifft eine Vorrichtung zum Messen einer Länge einer Schnur, insbesondere einer Angelschnur. In weiteren Aspekten betrifft die Erfindung die Verwendung der genannten Vorrichtung sowie ein Verfahren zum Einstellen einer Länge einer Angelschnur auf einer Angelrolle.

Die eingangs erläuterte Vorrichtung kann beispielsweise beim Karpfenangeln eingesetzt werden, bei dem es darauf ankommt, den Köder wiederholt an exakt derselben Stelle im Gewässer zu platzieren. Dies ist insbesondere dann erforderlich, wenn zuvor Futter an einem bestimmten Punkt ausgebracht wurde, um die Karpfen gezielt anzulocken. Um eine konstante Wurfweite zu gewährleisten, muss die Länge der ausgeworfenen Angelschnur exakt bestimmt und bei jedem Wurf reproduziert werden. Eine ungenaue Einstellung der Schnurlänge kann dazu führen, dass der Köder außerhalb des Futterplatzes landet, wodurch die Wahrscheinlichkeit eines Fangs erheblich verringert wird.

Zur Lösung dieses Problems werden im Stand der Technik sogenannte Distance Sticks verwendet. Dabei handelt es sich um zwei stabförmige Elemente, die mit einem definierten Abstand zueinander in den Boden gesteckt werden. Die Angelschnur wird um die Distance Sticks gewickelt, wobei die Anzahl der Wicklungen mit dem festgelegten Abstand multipliziert wird, um die gewünschte Schnurlänge zu bestimmen. Anschließend wird die Schnur im Clip der Angelrolle fixiert (geklippt), sodass bei jedem Wurf genau diese Länge ausgebracht wird. Auf diese Weise können Angler erreichen, dass der Köder wiederholt an der gleichen Stelle im Wasser platziert wird.

Obwohl Distance Sticks eine Längenbestimmung ermöglichen, gibt es verschiedene praktische Nachteile. Insbesondere ist dieses Verfahren nicht präzise genug, da sich erstens eine schiefe Schnurlage auf die Länge auswirkt und zweitens eine zu hohe Spannung zwischen den Distance Sticks zum Zusammenziehen der Distance Sticks führt. Dieser Fehler addiert sich mit jeder Wicklung der Angelschnur auf die Distance Sticks, sodass das Verfahren nicht ausreichend genau ist. Weiters benötigt man einen guten Untergrund, um die Distance Sticks fest und stabil genug zu verankern. In Werbevideos werden die Distance Sticks oft in eine gemähte Wiese gesteckt, die in der Praxis jedoch nur in Ausnahmefällen zur Verfügung steht. Zudem benötigt man viel Übung, um das Verfahren schnell durchzuführen, und damit die Angelschnur nicht von den Distance Sticks herunterfällt.

Alternativ zu Distance Sticks gibt es verschiedene andere Ansätze zur Bestimmung der Schnurlänge. Eine Möglichkeit besteht darin, Markierungen auf der Schnur selbst anzubringen, beispielsweise durch spezielle Clips oder farbliche Kennzeichnungen. Eine weitere Alternative besteht in der Verwendung von Angelrollen mit integrierten Längenmessvorrichtungen, die die Schnur direkt an der Rolle messen und eine wiederholbare Wurfweite ermöglichen. Diese Lösungen sind jedoch entweder ungenau, umständlich in der Handhabung oder mit zusätzlichen Kosten verbunden.

Es ist daher die Aufgabe der Erfindung, die Nachteile des Standes der Technik zu überwinden und eine Vorrichtung zu schaffen, mit welcher die Länge der Angelschnur insbesondere für das Karpfenangeln leichter und genauer einstellbar ist.

Diese Aufgabe wird gelöst durch eine Vorrichtung zum Messen einer Länge einer Schnur, insbesondere einer Angelschnur, wobei die Vorrichtung einen Spulkörper mit einer rotationssymmetrisch um eine Spulachse verlaufenden Lauffläche für die Angelschnur umfasst, wobei die Lauffläche von zwei Begrenzungswänden begrenzt ist, die in axialer Richtung beabstandet sind, wobei der Spulkörper zumindest ein Verbindungselement zur Fixierung eines Endes der Angelschnur umfasst, und wobei eine der Begrenzungswände eine Ausnehmung aufweist, um die Angelschnur vom Verbindungselement auf die Lauffläche zu führen.

Erfindungsgemäß wird die Bestimmung der Länge der Angelschnur dadurch erzielt, dass ein Ende der Angelschnur am Spulkörper fixiert wird und dann auf einer Lauffläche mit einem vorbestimmten Umfang aufgespult wird. Der Benutzer kann nun den Spulkörper manuell um die Spulachse drehen und dabei die Anzahl der vollständigen Umdrehungen mitzählen. Unter Kenntnis der Umdrehungen und des Umfangs der Lauffläche kann der Benutzer nun die Länge der Angelschnur bestimmen. Wenn der Benutzer zu einem späteren Zeitpunkt dieselbe Länge der Angelschnur bemessen will, fixiert er das Ende der Angelschnur abermals am Spulkörper und rotiert den Spulkörper um dieselbe Anzahl an Umdrehungen, sodass dieselbe Länge der Angelschnur bemessen wird, wobei die Abweichung minimiert ist und insbesondere frei von äußeren Einflüssen ist, da der Umfang der Lauffläche konstant bleibt.

Im Gegensatz zu den Distance Sticks kann die Länge der Angelschnur somit weitaus genauer eingestellt werden, da das größte Problem der Distance Sticks - der veränderliche Abstand der beiden Distance Sticks aufgrund der Beschaffenheit des Untergrunds und der Spannung der Angelschnur - eliminiert wurde. Die erfindungsgemäße Lösung ermöglicht damit eine weitaus genauere und einfachere Bestimmung der Länge der Angelschnur, was dazu führt, dass der Köder z.B. beim Karpfenangeln weitaus genauer und zuverlässiger auf den Futterplatz der Fische geworfen werden kann.

Darüber hinaus kann die Länge der Angelschnur auch wesentlich schneller und mit weniger Übung als mit den Distance Sticks eingestellt werden, da die Angelrute beim Aufspulen der Angelschnur auf die Lauffläche des Spulkörpers statisch verbleiben kann und nicht wie bei den Distance Sticks hin und her geschwenkt werden muss.

Gegenüber Angelrollen mit integrierten Längenmessvorrichtungen hat die erfindungsgemäße Lösung den Vorteil, dass die Vorrichtung ein externes Messinstrument ist und auch mit allen klassischen Angelrollen eingesetzt werden kann, die sich bereits am Markt befinden. Die Erfindung ermöglicht somit die Längenmessung mit allen Arten von Angelrollen und hat dadurch auch erhebliche Kostenvorteile, da keine Angelrollen ausgetauscht werden müssen.

Bei der erfindungsgemäßen Rolle ist überdies besonders, dass das Verbindungselement von der Lauffläche gesondert ist und beispielsweise auf der Vorderseite des Spulkörpers angeordnet sein kann. Um die Angelschnur vom Verbindungselement auf die Lauffläche zu führen, ist die Ausnehmung in einer der Begrenzungswände vorgesehen, welche einen vordefinierten Übergang vom Verbindungselement auf die Lauffläche bildet. Die Ausnehmung hat überdies den Zweck, einen "Nullpunkt" für die Messung der Länge zu bilden, da durch die Ausnehmung sichergestellt ist, dass die Angelschnur immer an derselben Stelle auf die Lauffläche geführt wird. Weiters kann die Ausnehmung als optische Anzeige für den Benutzer dienen, da immer eine volle Umdrehung des Spulkörpers vorliegt, wenn sich die Ausnehmung wieder an derselben Stelle wie im Ausgangszustand befindet.

Bevorzugt weist die Ausnehmung zumindest einen Abschnitt auf, der schräg zur radialen Richtung des Spulkörpers (d.h. normal zur der Spulachse) verläuft, wobei die Ausnehmung bevorzugt im Wesentlichen J-förmig ausgeführt ist. Der schräge Abschnitt bietet der Angelschnur zumindest einen gewissen Widerstand nach oben, sodass die Angelschnur nicht einfach aus der Ausnehmung rutschen wird. Wenn die Ausnehmung im Wesentlichen J-förmig ausgeführt ist, bildet diese zudem eine Hakenfunktion aus, was das Herausrutschen der Angelschnur aus der Ausnehmung weiter erschwert.

Die Verbindungselemente können in verschiedenen Varianten ausgebildet werden. In einer ersten Variante kann der Spulkörper eine Karabineraufnahme als Verbindungselement aufweisen, wobei die Karabineraufnahme bevorzugt durch einen Bogen gebildet ist, dessen zwei Endabschnitte mit dem Spulkörper verbunden sind.

In einer weiteren Variante könnte der Spulkörper eine Zentralaufnahme für ein Angelgewicht (z.B. ein sogenanntes schweres Blei oder ein Method-Blei) der Angelschnur als Verbindungselement aufweist. Damit kann das am Ende der Angelschnur vorgesehene Angelgewicht in der Zentralaufnahme aufgenommen werden und schwingt beim Rotieren des Spulkörpers nicht frei herum. In dieser Variante ist besonders bevorzugt, wenn die Zentralaufnahme mittels eines Deckels verschließbar ist, da das Blei dadurch allseitig umschlossen ist.

Die Zentralaufnahme kann insbesondere auch dazu eingesetzt werden, um einen ruhigen Lauf des Spulkörpers ohne Unwucht zu ermöglichen. Hierfür wird vorgesehen, dass die Zentralaufnahme im Bereich der Spulachse vorgesehen ist. Konkret verläuft die Spulachse bevorzugt durch die Mitte der Zentralaufnahme. Die Zentralaufnahme kann auch einen Klemmmechanismus für das Blei umfassen, sodass das Angelgewicht in einer vordefinierten Position aufgenommen wird. Alternativ könnte die Zentralaufnahme auch in einem radialen Abstand zur Spulachse angeordnet sein, wobei der Spulkörper in diesem Fall unrund rotieren könnte.

Bevorzugt kann der Spulkörper, z.B. an einer der Begrenzungswände, Markierungen zur Anzeige des Rotationsversatzes bezüglich der Ausnehmung aufweisen, wobei weiters bevorzugt zumindest vier oder zumindest acht, besonders bevorzugt genau zehn, Markierungen vorgesehen sind. Damit kann auch ein Bruchteil einer ganzen Umdrehung exakt gemessen werden. Beispielsweise beträgt der Umfang der Lauffläche genau 1 m. Ferner können zehn Markierungen, z.B. 0 bis 9, in äquidistanten Winkelabständen am Spulkörper vorgesehen sein. Eine Rotation des Spulkörpers von einer Markierung zur nächsten Markierung würde in diesem Beispiel exakt einer Länge von 10 cm der Angelschnur entsprechen.

Die Vorrichtung kann optional ein ortsfest montierbares Montagelement, bevorzugt einen Montagebalken, und eine Führungseinheit zur Führung der Angelschnur umfassen, wobei der Spulkörper um die Spulachse drehbar auf dem Montageelement gelagert ist, wobei die Führungseinheit in radialer Richtung des Spulkörpers unmittelbar über den Begrenzungswänden am Montageelement gelagert ist. Hierbei kann die Angelschnur in die Führungseinheit eingelegt werden, damit die Angelschnur beim Drehen des Spulkörpers von einer vordefinierten Richtung zugeführt wird. Das Montageelement und die Führungseinheit ermöglichen damit ein noch fehlerunanfälligeres Aufspulen der Angelschnur.

Zwar sind einige Ausführungen des Spulkörpers möglich, jedoch umfasst der Spulkörper bevorzugt ein rotationssymmetrisch um die Spulachse rotierbares Zentrallager und zumindest zwei oder zumindest drei Stützstreben, welche die Lauffläche vom Zentrallager beabstanden. Der Spulkörper ist somit kein tellerförmiges Element, sondern weist dank der gegenseitig beabstandeten Stützstreben Materialeinsparungen auf. Das Verbindungselement ist hierbei bevorzugt an den Stützstreben oder am Zentrallager vorgesehen.

Aus Fertigungsgründen kann bevorzugt sein, dass der Spulkörper einstückig gefertigt ist und beispielsweise aus Kunststoff besteht, damit der Spulkörper als 3D-Druck oder als Spritzgusselement hergestellt werden kann. Alternativ kann der Spulkörper auch aus mehreren Elementen zusammengesetzt werden, beispielsweise aus einem Zentrallager und einer Lauffläche aus Kunststoff, wobei das Zentrallager und die Lauffläche von Stützstreben aus Metall beabstandet sind.

Besonders bevorzugt weist die Lauffläche einen Umfang von 1 m +/-5 mm auf, was das Mitzählen der Umdrehungen für den Benutzer besonders vereinfacht. Es versteht sich jedoch, dass auch andere Größen gewählt werden können. Beispielsweise bietet sich an, eine Lauffläche mit einem Umfang von 5 Fuß (entspricht ca. 1,5 m bzw. 1,5 m +/-5 mm) zu wählen, da dies das Mitzählen der Umdrehungen für jene Benutzer vereinfacht, die üblicherweise Maßangaben in Fuß verwenden. Bevorzugt hat die Lauffläche jedoch einen Umfang von zumindest 50 cm oder zumindest 80 cm, da der Benutzer dadurch den Spulkörper nicht zu oft drehen muss, um eine gewünschte Länge der Angelschnur freizugeben. Weiters hat die Lauffläche bevorzugt einen Umfang von maximal 2 m oder maximal 3 m, damit die Vorrichtung für einen Angler transportfähig bleibt.

Weiters bevorzugt kann die Vorrichtung ferner Befestigungsmittel umfassen, welche drehfest mit einer Umgebung verbindbar sind, wobei der Spulkörper um die Spulachse drehbar an den Befestigungsmitteln gelagert ist, wobei die Befestigungsmittel bevorzugt durch eine Klemme gebildet sind. Die Klemme kann beispielsweise Teil eines Montagearms sein, sodass sich die Klemme nicht unmittelbar hinter dem Spulkörper befinden muss. Hierbei umfasst die Vorrichtung in der Regel weiters eine Lagerachse, welche den Spulkörper rotierbar an den Befestigungsmitteln lagert. Entweder der Spulkörper oder die Befestigungsmittel können drehfest mit der Lagerachse verbunden sein und das jeweils andere Element weist ein Lager auf, in dem die Lagerachse rotieren kann. Wenn das oben erwähnte Montageelement eingesetzt wird, ist dieses in der Regel drehfest mit den Befestigungsmitteln verbunden. Anstatt der Klemme könnten die Befestigungsmittel beispielsweise auch durch einen Erdspieß oder ein Sitz, insbesondere eine Rückenlehne eines Sitzes, gebildet sein. Der Erdspieß ist drehfest mit der Umgebung verbindbar, indem er in den Untergrund gesteckt wird, und der Sitz ist aufgrund seines Eigengewichts drehfest mit der Umgebung verbindbar.

Weiters bevorzugt sind die Begrenzungswände in einem Abstand von 0,5 cm bis 3 cm oder bis 5 cm angeordnet. Diese Maße haben sich in Prototypen der vorliegenden Vorrichtung besonders bewährt.

In einer vorteilhaften Variante kann der Spulkörper eine Sensoreinheit umfassen, die dazu ausgebildet ist, einen Winkelversatz des Spulkörpers (z.B. einen kontinuierlichen Winkelversatz) oder eine diskrete Anzahl von Umdrehungen des Spulkörpers zu messen, wobei der Spulkörper bevorzugt eine Anzeigeeinheit zur Anzeige des von der Sensoreinheit gemessenen Winkelversatzes, der von der Sensoreinheit gemessenen Anzahl an Umdrehungen oder einer davon abgeleiteten Größe, insbesondere der Länge der ausgespulten Angelschnur, umfasst. Dadurch muss der Benutzer beim Drehen des Spulkörpers nicht die Umdrehungen mitzählen, um die ausgespulte Länge der Angelschnur zu bestimmen.

Vorteilhaft ist auch, wenn die Vorrichtung eine Bremseinrichtung umfasst, welche dazu ausgebildet ist, eine Drehgeschwindigkeit des Spulkörpers auf ein Maximum zu begrenzen, eine Drehgeschwindigkeit des Spulkörpers auf einem konstanten Wert zu halten oder den Spulkörper in einen Stillstand zu bringen. Die Bremseinrichtung kann, z.B. durch Verstellung einer Federkraft einstellbar ausgeführt sein. Dieser Widerstand kann den Spulenkörper insbesondere beim Wiederaufspulen der Angelschnur auf die Angelrolle bremsen, was zu einer sehr gleichmäßigen Schnurlage auf der Angelrolle führt und ein Nachlaufen des Spulkörpers verhindert bzw. reduziert.

In einem weiteren Aspekt betrifft die Erfindung die Verwendung der genannten Vorrichtung zum Messen einer Länge einer Angelschnur, wobei die Angelschnur insbesondere einen Durchmesser von 0,05 mm bis 0,5 mm, bevorzugt 0,15 mm bis 0,4 mm aufweisen kann. In anderen Anwendungszwecken könnte die Vorrichtung auch dazu ausgebildet sein, die Länge einer anderen Schnur bzw. einer Schnur eines anderen Durchmessers zu bestimmen. Beispielsweise könnte die Vorrichtung zur Tiefenmessung mit einem Lot eingesetzt werden wobei in diesem Fall statt einem Angelgewicht ein Lot verwendet werden kann.

In einem weiteren Aspekt betrifft die Erfindung ein Verfahren zum Einstellen einer Länge einer Angelschnur auf einer Angelrolle, wobei das Verfahren mit der genannten Vorrichtung durchgeführt wird und die folgenden Schritte umfasst:
- Bereitstellen der Vorrichtung und einer Angel, welche die auf einer Angelrolle aufgespulte Angelschnur umfasst,
- Fixieren eines Endes der Angelschnur am Verbindungselement,
- Führen der Angelschnur durch die Ausnehmung und optional die Führungseinheit
- Drehen des Spulkörpers um die Spulachse, um die Angelschnur auf die Lauffläche aufzuspulen, wobei der Spulkörper gedreht wird, bis die gewünschte Länge erreicht ist,
- Klippen der Angelschnur an der Angelrolle, und
- Aufspulen der Angelschnur auf die Angelrolle.

Somit legt man zuerst die Angelrute auf eine Gabel bzw. Rutenablage und fixiert dabei das freie Ende der Angelschnur am Spulkörper, während man die Angelschnur durch die Ausnehmung auf die Lauffläche legt. Der Spulkörper wird so oft und so weit gedreht, bis die gewünschte Länge der Angelschnur ausgespult ist. Dann kann die Angelschnur an der Angelrolle geklippt werden, d.h. ein weiteres Abspulen der Angelschnur von der Angelrolle ist nicht möglich. Die Angelschnur wird auf die Angelrolle zurück aufgespult und die Angel ist zum Auswurf bereit. Beim Auswurf wird sich die Angelschnur nur bis zur geklippten Stelle, d.h. zu der vom Benutzer gewünschten Stelle, abspulen, sodass ein Köder wiederholt an einen Futterplatz geworfen werden kann.

Es sei festgehalten, dass es keinen Unterschied macht, ob das Ende der Angelschnur zuerst mit dem Verbindungselement verbunden wird und die Angelschnur danach über die Ausnehmung auf die Lauffläche gelegt wird, oder ob die Angelschnur zuerst in die Ausnehmung gelegt wird und danach mit dem Verbindungselement verbunden wird.

Im Folgenden werden bevorzugte und nicht einschränkende Ausführungsformen durch Verweis auf die angehängten Zeichnungen erläutert.
Figur 1 zeigt eine erfindungsgemäße Vorrichtung in einer schematischen Perspektivansicht, wobei eine Angelschnur einer Angel in der Vorrichtung fixiert ist.
Figur 2 zeigt die Anordnung der Vorrichtung auf einer Sitzkiepe oder einem Angelstuhl.
Figur 3 zeigt eine Detailansicht der erfindungsgemäßen Vorrichtung.
Die Figuren 4 und 5 zeigen die Vorrichtung der Figur 1 in einer Vorderansicht (Figur 4) und in einer Seitenansicht (Figur 5).
Figur 6 zeigt ein erstes Foto der Vorrichtung, aus dem ersichtlich ist, wie die Angelschnur durch die Ausnehmung der Begrenzungswand auf die Lauffläche geführt ist.
Figur 7 zeigt ein zweites Foto der Vorrichtung, wobei der Spulkörper der Vorrichtung in Bezug auf den Zustand von Figur 6 leicht gedreht wurde.
Figur 8 zeigt ein drittes Foto der Vorrichtung, wobei ein Blei an der Angelschnur vorgesehen ist und das Blei in eine Zentralauflage der Vorrichtung gelegt wurde.
Figur 9 zeigt eine weitere Variante des Spulkörpers der Vorrichtung.

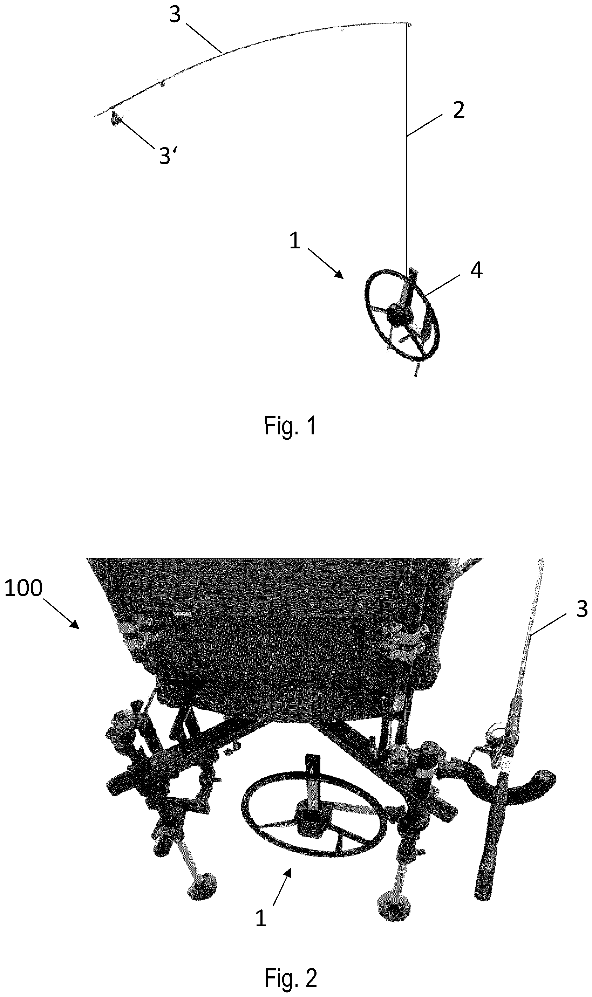

Figur 1 zeigt eine Vorrichtung 1, die zum Messen einer Länge einer Angelschnur 2 eingesetzt wird. Die Angelschnur 2 befindet sich hierbei in einem Ausgangszustand in der Regel aufgespult auf einer Angelrolle 3' einer Angel 3. Figur 1 zeigt diesen Ausgangszustand, wobei die Angelschnur 2 nur um einen minimalen Abstand ausgespult ist, sodass die Angelschnur 2 an der Vorrichtung 1 fixiert werden kann. In diesem Zustand kann ein Spulkörper 4 der Vorrichtung 1 um eine vorbestimmte Anzahl von Umdrehungen gedreht werden, wobei jede Umdrehung des Spulkörpers 4 die Angelschnur 2 um beispielsweise 1 m ausspult. In diesem Verfahren kann der Spulkörper 4 beispielsweise 75-mal vollständig umdreht werden, um 75 m der Angelschnur auszuspulen. Dann wird die Angelschnur 2 an der Angelrolle 3' "geklippt", sodass diese nicht weiter als 75 m ausgespult werden kann, und die Angelschnur 2 wird durch Zurückdrehen der Angelrolle 3' wieder auf diese aufgespult. Danach kann die Angelschnur 2 ausgeworfen werden und der Köder landet exakt auf der zuvor eingestellten Distanz von 75 m.

Figur 2 zeigt, dass die genannte Vorrichtung 1 insbesondere auf einem Angelstuhl oder einer Sitzkiepe 100 vorgesehen werden kann, und somit kein weiterer freier Raum in der Umgebung benötigt wird, wie dies beim Verfahren der Distance Sticks der Fall ist.

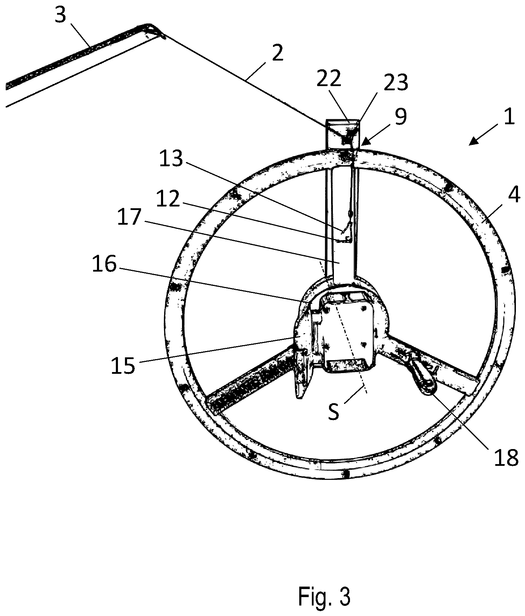

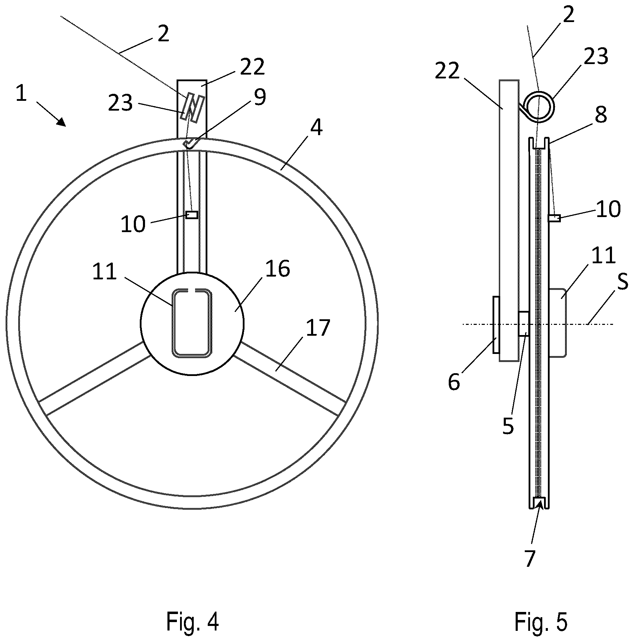

Wie aus Figur 3 ersichtlich ist, umfasst die erfindungsgemäße Vorrichtung 1 den genannten Spulkörper 4, der um eine Spulachse S verdrehbar ist, die insbesondere aus Figur 5 ersichtlich ist. Der Spulkörper 4 kann beispielsweise ein integriertes Lager aufweisen, das um eine statische Lagerachse 5 verdrehbar ist, die in Figur 5 schematisch dargestellt ist. Die Spulachse S verläuft zentral durch die Lagerachse 5. Die Lagerachse 5 kann mittels eines Befestigungsmittels 6 ortsfest an einer Sitzkiepe, einer Rückenlehne, einem Erdspieß oder dergleichen befestigt werden. Die Befestigungsmittel 6 können hierfür entsprechend ausgeführt werden, z.B. als Montagearm oder als einfache Klemme.

Es könnte jedoch auch vorgesehen werden, dass die Lagerachse 5 drehfest mit dem Spulkörper 4 verbunden ist und die Befestigungsmittel 6 ein ortsfestes Lager aufweisen, in dem die Lagerachse 5 drehbar aufnehmbar ist. Dieses ortsfeste Lager könnte beispielsweise in einer Sitzkiepe, einer Rückenlehne, einem Erdspieß oder dergleichen bereitgestellt werden.

Der Spulkörper 4 weist eine Lauffläche 7 auf, wobei der Umfang der Lauffläche 7 die Länge der Angelschnur 2 definiert, die bei einer vollständigen Umdrehung des Spulkörpers 4 auf die Lauffläche 7 aufgespult wird. Bevorzugt beträgt der Umfang der Lauffläche 7 genau 1 m, um das Zählen der aufgespulten Länge besonders einfach auszugestalten. Der Umfang der Lauffläche 7 könnte jedoch beispielsweise auch 2 m oder andere bevorzugt diskrete Werte betragen. Der Umfang der Lauffläche 7 könnte auch andere Werte betragen, insbesondere wenn die Anzahl der Umdrehungen des Spulkörpers 4 mit elektronischen Mitteln gemessen wird, wie weiter unten im Detail ausgeführt wird.

Die Lauffläche 7 ist gesehen in Richtung der Spulachse S beidseitig von Begrenzungswänden 8 begrenzt. Der Abstand der Begrenzungswände 8 beträgt beispielsweise 0,5 cm bis 3 cm, wobei von diesen Werten jedoch auch abgewichen werden kann. Die Lauffläche 7 ist in der Regel eine im Wesentlichen zylindrische Fläche, die entweder glatt sein oder eine Profilierung aufweisen kann. Die Profilierung kann beispielsweise durch in Umfangsrichtung verlaufende Rillen zur Führung der Angelschnur 2 gebildet sein. Die Lauffläche muss jedoch nicht zylindrisch sein, sondern könnte zwischen den Begrenzungswänden 8 auch konkav gekrümmt sein, und sich z.B. parabelförmig zwischen den Begrenzungswänden 8 erstrecken. In allen Fällen kann davon gesprochen werden, dass die Lauffläche 7 rotationssymmetrisch um die Spulachse S vorliegt. Die Lauffläche 7 und die Begrenzungswände bilden dabei im Wesentlichen eine nach außen offene U-Form.

Wie bereits erläutert begrenzen die Begrenzungswände 8 die Lauffläche 7, was dadurch erreicht wird, dass diese einen größeren Außendurchmesser als die Lauffläche 7 ausweisen, wie insbesondere aus Figur 5 ersichtlich ist. Die Dicke der Begrenzungswände 8 wird in der Regel wesentlich geringer gewählt als der Abstand der Begrenzungswände 8, z.B. kann die Dicke der Begrenzungswände 8 zumindest die Hälfte oder ein Fünftel des Abstands der Begrenzungswände 8 betragen.

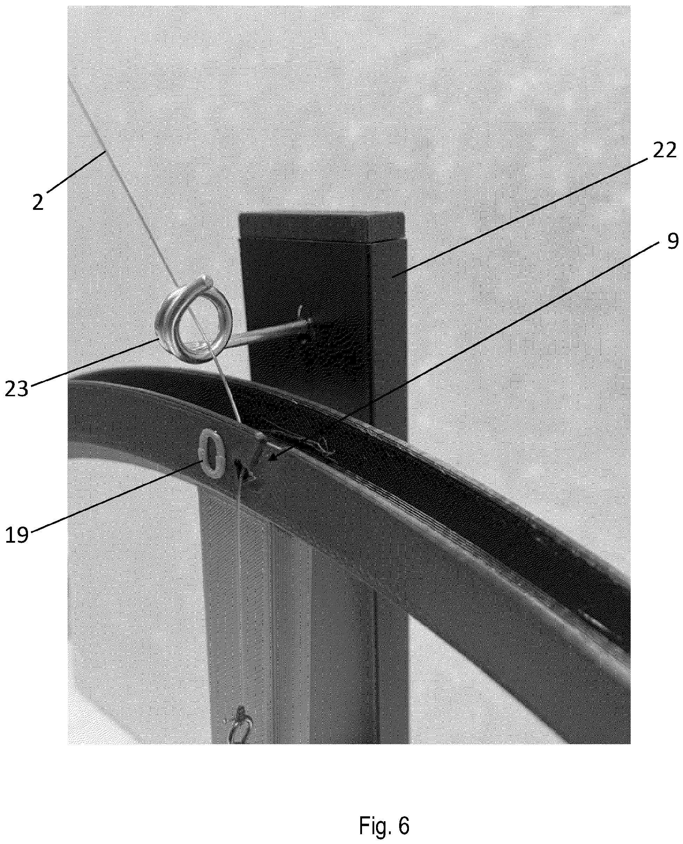

Wie insbesondere aus den Figuren 4, 6 und 7 ersichtlich ist, weist eine der Begrenzungswände 8 eine Ausnehmung 9 auf. Die Ausnehmung 9 kann beispielsweise von einer Oberseite der Begrenzungswand 8 bis zur Lauffläche 7 verlaufen, wobei dies jedoch nicht zwingend ist, und z.B. von der Außenseite der Begrenzungswand 8 nur den halben Weg zur Lauffläche 7 verlaufen könnte. Die Ausnehmung 9 hat den Zweck, dass die Angelschnur 2 von der Lauffläche 7 an einer vordefinierten Stelle auf die andere Seite der Begrenzungswand 8 verlaufen kann.

Aus Figur 4 ist ersichtlich, dass die Ausnehmung 9 eine J-Form aufweisen kann, um eine Hakenfunktion zu bilden. Hierfür kann die Ausnehmung 9 einen ersten Abschnitt aufweisen, der von der Oberseite der Begrenzungswand 8 radial nach innen verläuft, und einen zweiten Abschnitt, der vom radial innengelegenen Ende des ersten Abschnitts nach oben verläuft, jedoch nicht bis zur Oberseite der Begrenzungswand 8. Dadurch kann die Angelschnur 2 im radial äußeren Ende des zweiten Abschnitts eingehängt werden, um diese in der Ausnehmung 9 einzuhängen. Die Ausnehmung 9 könnte aber auch anders ausgeführt sein, z.B. im einfachsten Fall eine radial verlaufende Ausnehmung sein oder auch nur einen schräg verlaufenden Abschnitt aufweisen.

In den dargestellten Varianten weist der Spulkörper 4 nur eine Ausnehmung 9 auf, wobei jedoch vorgesehen sein könnte, dass eine der Begrenzungswände 8 mehr als eine Ausnehmung 9 aufweisen könnte oder dass beide Begrenzungswände 8 zumindest eine oder zumindest zwei Ausnehmungen 9 aufweisen. Bevorzugt weist der Spulkörper 4 jedoch nur an einer Begrenzungswand 8 genau eine Ausnehmung 9 auf.

Der Spulkörper 4 weist weiters zumindest ein Verbindungselement auf, wobei ein Ende der Angelschnur 2 an einem der Verbindungselemente fixiert werden kann. Das Verbindungselement bzw. die Verbindungselemente befinden sich in der Regel auf einer Seite des Spulkörpers 4, d.h. auf einer Seite des Spulkörpers 4, die normal auf die Spulachse S steht. Wenn das Ende der Angelschnur 2 mit dem Verbindungselement verbunden ist, kann diese von der Seite des Spulkörpers 4 durch die Ausnehmung 9 gelegt und so auf die Lauffläche 7 verbracht werden.

In der Variante der dargestellten Figuren weist der Spulkörper 4 zwei Verbindungselemente auf, und zwar eine Karabineraufnahme 10 und eine Zentralaufnahme 11. Es sei jedoch festgehalten, dass die Vorrichtung 1 auch nur mit einem Verbindungselement, z.B. nur mit der Karabineraufnahme 10 oder nur mit der Zentralaufnahme 11 ausgeführt werden kann, oder auch mehr als zwei Verbindungselemente aufweisen kann, z.B. drei Karabineraufnahmen 10.

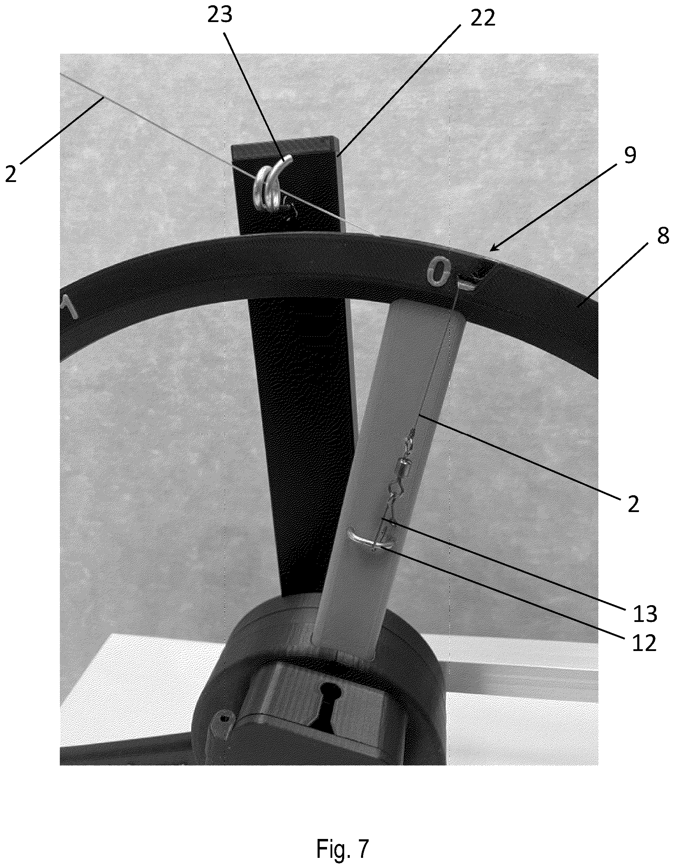

Die Karabineraufnahme 10 kann beispielsweise durch einen U-förmig angeordneten Bogen 12 ausgeführt sein, wie in Figur 7 im Detail dargestellt ist, wobei die offenen Enden des Bogens 12 am Spulkörper 4 befestigt sind, um eine allseitig umschlossene Durchgangsöffnung zu bilden. In diesen Bogen 12 kann ein Karabiner 13 oder auch ein Haken der Angelschnur 2 eingehängt werden, um die Angelschnur 2 so am Spulkörper 4 zu fixieren. Alternativ zum Bogen 12 kann die Karabineraufnahme auch durch eine Aussparung im Spulkörper 4 gebildet sein.

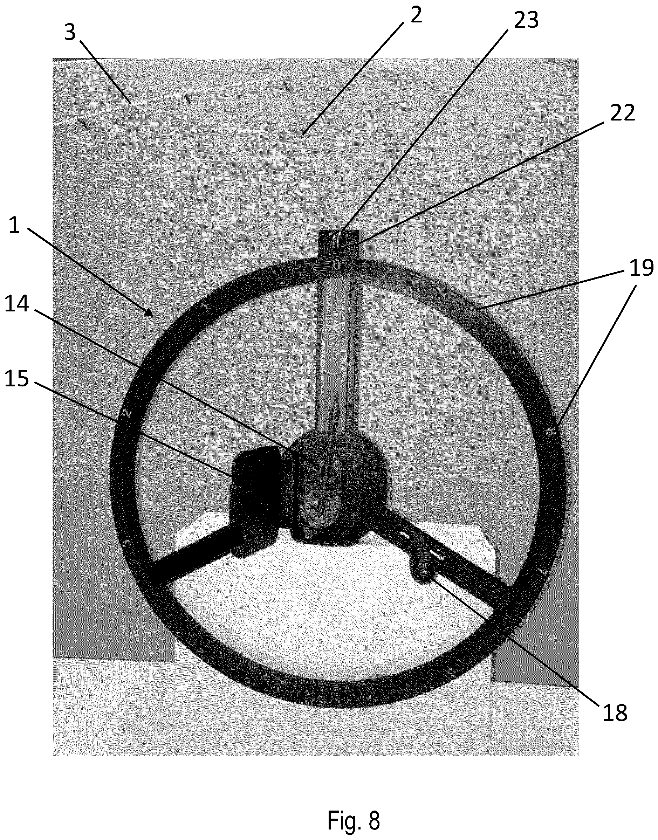

Die Verwendung der Zentralaufnahme 11 ist insbesondere aus Figur 8 ersichtlich. Die Zentralaufnahme 11 ist im Bereich der Spulachse S angeordnet, d.h. die Spulachse S verläuft im Wesentlichen zentral durch die Zentralaufnahme 11. Dadurch kann ein an der Angelschnur 2 befestigtes Blei 14 in die Zentralaufnahme 11 gelegt werden, was den zusätzlichen Effekt hat, dass das Blei 14 einen ruhigen Lauf des Spulkörpers 4 ohne Unwucht ermöglicht.

Optional kann die Zentralaufnahme 11 durch einen Deckel 15 verschlossen werden, d.h. das Blei 14 kann zwischen der Zentralaufnahme 11 und dem Deckel 15 eingeschlossen werden. Der Deckel 15 kann abnehmbar oder permanent an der Zentralaufnahme 11 angelenkt sein, indem der Deckel 15 z.B. einstückig an der Zentralaufnahme 11 ausgeführt ist oder mittels einer Scharnierverbindung an dieser befestigt ist.

Wie dargestellt kann der Spulkörper 4 mit einem im Wesentlichen ringförmigen Element (gebildet durch die Lauffläche 7 und die Begrenzungswände 8), einem Zentrallager 16 und Stützstreben 17 ausgeführt sein, welche das ringförmige Element vom Zentrallager 16 beabstanden. Es können zumindest zwei oder zumindest drei, bevorzugt genau drei, Stützstreben 7 vorgesehen sein, um eine stabile Verbindung zwischen dem Zentrallager 16 und dem ringförmigen Element zu erzielen. Das ringförmige Element, die Stützstreben 7 und das Zentrallager 16 können einstückig gefertigt sein oder aus mehreren Elementen zusammengesetzt werden.

Es versteht sich jedoch, dass der Spulkörper 4 auch anders ausgeführt werden könnte, z.B. als plattenförmiger Körper, welcher alle genannten Elemente integriert.

Der Spulkörper 4 besteht bevorzugt aus Kunststoff und könnte z.B. mittels eines 3D-Druckverfahrens hergestellt werden, oder aber auch im Spritzgussverfahren. In anderen Varianten könnte der Spulkörper 4 aber auch aus anderen Materialien wie Metall oder Holz gefertigt sein.

Um das Spulen zu erleichtern, kann der Spulkörper 4 einen Griff 18 umfassen, der z.B. an einer der genannten Stützstreben 17 oder auch an einer anderen Stelle vorgesehen sein kann.

Wie insbesondere aus Figur 8 ersichtlich ist, kann der Spulkörper 4 auch Markierungen 19 aufweisen, damit die Länge der Angelschnur auch in Bruchteilen von ganzen Umdrehungen gemessen werden kann. Hierbei ist festzuhalten, dass die Stelle der Ausnehmung 9 einen Nullpunkt definiert. Wenn der Spulkörper 4 in eine Stellung gebracht wird, bei dem die Angelschnur 2 nicht unmittelbar von der Stelle der Ausnehmung 9 zur Angel weggeführt wird, kann dennoch eine genaue Länge der Angelschnur 2 bestimmt werden, indem dieser Winkelversatz des Spulkörpers 4 mitberücksichtigt wird, der durch die Markierungen gekennzeichnet sein kann. Es können beispielsweise zumindest vier oder zumindest acht, besonders bevorzugt genau zehn, Markierungen vorgesehen sein, die bevorzugt in äquidistanten Abständen um den Umfang des Spulkörpers 4 vorliegen. Diese Maßnahmen helfen insbesondere dabei, dass ein Benutzer die aufgespulte Länge durch Zählen von vollen Umdrehungen und optisches Erfassen von teilweisen Umdrehungen anhand der Markierungen ohne weitere Hilfsmittel durchführen kann.

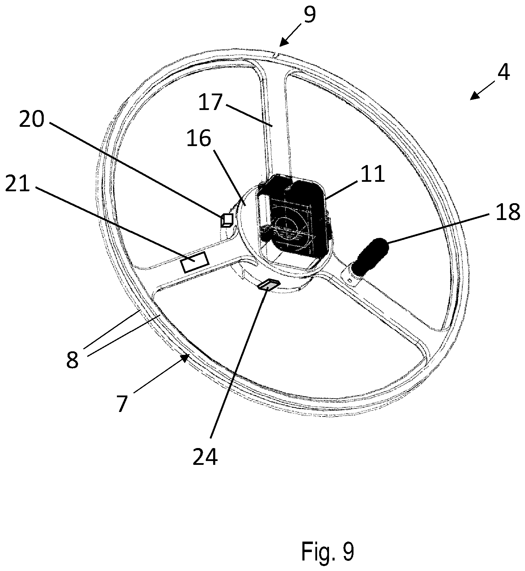

In weiteren Varianten könnte die Länge der auf den Spulkörper 4 aufgespulten Angelschnur 2 auch elektronisch bestimmt werden. Hierfür könnte die Vorrichtung 1 beispielsweise eine Sensoreinheit 20 aufweisen, siehe Figur 9, welche eine Anzahl von Umdrehungen des Spulkörpers 4 misst. Die Sensoreinheit 20 könnte beispielsweise ein Ratschenzähler, ein Hall-Sensor oder ein induktiver Sensor sein, um die Anzahl an Umdrehungen, und auch den Winkelversatz von unvollständigen Umdrehungen, zu messen. Die Sensoreinheit 20 kann beispielsweise im Lager des Spulkörpers 4 oder des Befestigungsmittels 6 integriert sein.

Der Spulkörper 4 könnte eine Anzeigeeinheit 21 zur Anzeige der von der Sensoreinheit 20 gemessenen Anzahl an Umdrehungen umfassen. Im Beispiel der Figur 9 ist die Anzeigeeinheit als Bildschirm, z.B. LCD-Display, ausgeführt, an welcher die gemessene Anzahl an Umdrehungen bzw. die auf den Spulkörper 4 aufgespulte Länge der Angelschnur 2 angezeigt werden kann. Alternativ kann die Sensoreinheit 20 die Messwerte auch an eine externe Anzeigeeinrichtung, z.B. ein Mobiltelefon mit entsprechender App, senden, damit dort die genannten Werte angezeigt werden können.

Figur 9 zeigt weiters, dass die Vorrichtung 1 eine Bremseinrichtung 24 umfassen kann, welche beispielsweise eine Drehgeschwindigkeit des Spulkörpers 4 auf ein Maximum begrenzen kann, eine Drehgeschwindigkeit des Spulkörpers 4 auf einem konstanten Wert halten kann oder den Spulkörper 4 in einen Stillstand bringen kann. Die Bremseinrichtung ist insbesondere dann vorteilhaft, wenn die Angelschnur 2 nach einem Messvorgang wieder auf die Angelrolle 3' aufgespult wird, damit die Angelschnur 2 mit einer gleichmäßigen Spannung auf die Angelrolle 3' aufgespult wird und es zu keiner Beschädigung der Angelschnur 2 kommen kann. Die Bremseinrichtung 24 kann beispielsweise eine mechanische Reibungsbremse wie eine Backenbremse, Bandbremse oder ein Scherensystem oder eine magnetische Bremse, pneumatische Bremse, hydraulische Bremse oder eine Fliehkraftbremse sein. Es versteht sich, dass die Bremseinrichtung 24 auch anders ausgeführt werden kann. Um die Bremseinrichtung 24 auszuführen, kann diese beispielsweise an der Lagerachse 5 vorgesehen sein und den Spulkörper 4 nahe der Spulachse S bremsen, oder die Bremseinrichtung 24 könnte auch an der Außenumfangsseite des Spulkörpers 4, z.B. an den Begrenzungswänden 8, angreifen.

Zurückkommend auf die Figuren 3 bis 8 ist weiters ersichtlich, dass die Vorrichtung 1 optional einen Montagebalken 22 und eine Führungseinheit 23 umfassen kann. Der Montagebalken 22 wird in der Regel im Wesentlichen vertikal ortsfest montiert, d.h. liegt in der Betriebsstellung im Wesentlichen vertikal vor, und kann beispielsweise die oben erwähnten Befestigungsmittel 6 umfassen mit bzw. mit diesen verbunden sein. Bevorzugt ist der Montagebalken 22 länger als der Radius des Spulkörpers 4, sodass der Spulkörper 4 mit seiner Lagerachse 5 drehbar an einem ersten Ende des Montagebalkens 22 gelagert sein kann und das andere zweite Ende des Montagebalkens 22 den Spulkörper 4 überragen kann. Am zweiten Ende kann die Führungseinheit 23 am Montagebalken 22 vorgesehen sein, sodass die Führungseinheit 23 in radialer Richtung des Spulkörpers 4 unmittelbar über den Begrenzungswänden 8 am Montagebalken 22 gelagert sein kann. Dadurch wird erzielt, dass die Angelschnur 2 in der Führungseinheit 23 gehalten wird und beim Umdrehen des Spulkörpers 4 an einer vordefinierten Stelle auf den Spulkörper 4 geführt wird, um ein Abrutschen der Angelschnur 2 vom Spulkörper 4 zu verhindern.

Der Montagebalken 22 kann beispielsweise auf einer Sitzkiepe, einer Rückenlehne oder einem Erdspieß befestigt sein, oder auch Teil dieser Einrichtungen sein. Beispielsweise könnte der Montagebalken 22 eine vertikale Strebe eines Sitzes oder dergleichen sein. Es sei jedoch festgehalten, dass statt dem Montagebalken 22 auch durch ein anderes Montageelement verwirklicht sein könnte, wie z.B. eine Platte, welche die Lagerachse 5 ortsfest lagert und die Führungseinheit 23 umfasst.

Optional kann die Vorrichtung 1 auch einen Motor umfassen (nicht dargestellt), welcher dazu ausgebildet ist, den Spulkörper 4 um die Spulachse S zu verdrehen. Damit kann vollautomatisch eine gewünschte Länge der Angelschnur 2 auf die Lauffläche 7 aufgespult werden. Der Motor kann mit einer Steuereinheit verbunden sein, welche eine Benutzerschnittstelle aufweisen könnte, über welche der Benutzer die gewünschte aufzuspulende Länge eingeben kann. Alternativ oder zusätzlich kann der Motor auch dazu eingesetzt werden, dass eine aufgespulte Länge der Angelschnur 2 gespeichert wird, wobei der Benutzer den Motor einschalten kann, wenn er dieselbe Länge nochmals auf den Spulkörper 4 wickeln möchte, damit der Motor vollautomatisch dieselbe Länge auf den Spulkörper 4 aufwickelt. In dieser Variante könnte der Motor auch durch eine Federkraft oder dergleichen angetrieben sein.

## Patentansprüche

1. Vorrichtung (1) zum Messen einer Länge einer Schnur, insbesondere einer Angelschnur (2),
**dadurch gekennzeichnet, dass**
die Vorrichtung (1) einen Spulkörper (4) mit einer rotationssymmetrisch um eine Spulachse (S) verlaufenden Lauffläche (7) für die Angelschnur (2) umfasst, wobei die Lauffläche (7) von zwei Begrenzungswänden (8) begrenzt ist, die in axialer Richtung beabstandet sind, wobei der Spulkörper (4) zumindest ein Verbindungselement (10, 11) zur Fixierung eines Endes der Angelschnur (2) umfasst,
und wobei eine der Begrenzungswände (8) eine Ausnehmung (9) aufweist, um die Angelschnur (2) vom Verbindungselement (10, 11) auf die Lauffläche (7) zu führen.

2. Vorrichtung (1) nach Anspruch 1, wobei die Ausnehmung (9) zumindest einen Abschnitt aufweist, der schräg zur radialen Richtung des Spulkörpers (4) verläuft, wobei die Ausnehmung (9) bevorzugt im Wesentlichen J-förmig ausgeführt ist.

3. Vorrichtung (1) nach Anspruch 1 oder 2, wobei der Spulkörper (4) eine Karabineraufnahme (10) als Verbindungselement aufweist, wobei die Karabineraufnahme (10) bevorzugt durch einen Bogen (12) gebildet ist, dessen zwei Endabschnitte mit dem Spulkörper (4) verbunden sind.

4. Vorrichtung (1) nach einem der vorherstehenden Ansprüche, wobei der Spulkörper (4) eine Zentralaufnahme (11) für ein Blei (14) der Angelschnur (2) als Verbindungselement aufweist.

5. Vorrichtung (1) nach Anspruch 4, wobei die Zentralaufnahme (11) mittels eines Deckels (15) verschließbar ist.

6. Vorrichtung (1) nach Anspruch 4 oder 5, wobei die Zentralaufnahme (11) im Bereich der Spulachse (S) vorgesehen ist.

7. Vorrichtung (1) nach einem der vorherstehenden Ansprüche, wobei der Spulkörper (4), bevorzugt an einer der Begrenzungswände (8), Markierungen (19) zur Anzeige des Rotationsversatzes bezüglich der Ausnehmung (9) aufweist, wobei bevorzugt zumindest vier oder zumindest acht, besonders bevorzugt genau zehn, Markierungen (19) vorgesehen sind.

8. Vorrichtung (1) nach einem der vorherstehenden Ansprüche, ferner umfassend ein ortsfest montierbares Montagelement, bevorzugt einen Montagebalken (22), und eine Führungseinheit (23) zur Führung der Angelschnur (2), wobei der Spulkörper (4) um die Spulachse (S) drehbar auf dem Montageelement gelagert ist, wobei die Führungseinheit (23) in radialer Richtung des Spulkörpers (4) unmittelbar über den Begrenzungswänden (8) am Montageelement gelagert ist.

9. Vorrichtung (1) nach einem der vorherstehenden Ansprüche, umfassend ein rotationssymmetrisch um die Spulachse (S) rotierbares Zentrallager (16) und zumindest zwei oder zumindest drei Stützstreben (17), welche die Lauffläche (7) vom Zentrallager (16) beabstanden.

10. Vorrichtung (1) nach einem der vorherstehenden Ansprüche, ferner umfassend Befestigungsmittel (6), welche drehfest mit einer Umgebung verbindbar sind, wobei der Spulkörper (4) um die Spulachse (S) drehbar an den Befestigungsmitteln (6) gelagert ist, wobei die Befestigungsmittel (6) bevorzugt durch eine Klemme, einen Erdspieß oder einen Sitz gebildet sind.

11. Vorrichtung (1) nach einem der vorherstehenden Ansprüche, wobei die Lauffläche (7) einen Umfang von 0,5 m bis 3 m, insbesondere 1 m +/-5 mm, aufweist, und/oder oder wobei die Begrenzungswände (8) in einem Abstand von 0,5 cm bis 3 cm angeordnet sind.

12. Vorrichtung (1) nach einem der vorherstehenden Ansprüche, wobei der Spulkörper (4) eine Sensoreinheit (20) umfasst, die dazu ausgebildet ist, einen Winkelversatz des Spulkörpers (4) oder eine diskrete Anzahl von Umdrehungen des Spulkörpers (4) zu messen, wobei der Spulkörper (4) bevorzugt eine Anzeigeeinheit (21) zur Anzeige des von der Sensoreinheit (20) gemessenen Winkelversatzes, der von der Sensoreinheit (20) gemessenen Anzahl an Umdrehungen oder einer davon abgeleiteten Größe, insbesondere der Länge der ausgespulten Angelschnur (2), umfasst.

13. Vorrichtung (1) nach einem der vorstehenden Ansprüche, wobei der Spulenkörper (4) eine Bremseinrichtung (24) umfasst, welche dazu ausgebildet ist, eine Drehgeschwindigkeit des Spulkörpers (4) auf ein Maximum zu begrenzen, eine Drehgeschwindigkeit des Spulkörpers (4) auf einem konstanten Wert zu halten oder den Spulkörper (4) in einen Stillstand zu bringen.

14. Verwendung der Vorrichtung (1) nach einem der Ansprüche 1 bis 13 zum Messen einer Länge einer Angelschnur (2).

15. Verfahren zum Einstellen einer Länge einer Angelschnur (2) auf einer Angelrolle, wobei das Verfahren mit einer Vorrichtung (1) nach einem der Ansprüche 1 bis 13 durchgeführt wird und die folgenden Schritte umfasst:
- Bereitstellen der Vorrichtung (1) und einer Angel (3), welche die auf einer Angelrolle aufgespulte Angelschnur (2) umfasst,
- Fixieren eines Endes der Angelschnur (2) am Verbindungselement (10, 11),
- Führen der Angelschnur (2) durch die Ausnehmung (9)und optional durch die Führungseinheit (23)
- Drehen des Spulkörpers (4) um die Spulachse (S), um die Angelschnur (2) auf die Lauffläche (7) aufzuspulen, wobei der Spulkörper (4) gedreht wird, bis die gewünschte Länge erreicht ist,
- Klippen der Angelschnur (2) an der Angelrolle, und
- Aufspulen der Angelschnur (2) auf die Angelrolle.
